# FASCICULE DE BREVET EUROPEEN

(11) **EP 0 627 389 B1**
(45) Date de publication et mention de la délivrance du brevet: **02.09.1998**
(21) Numéro de dépôt: 94401223.6
(22) Date de dépôt: 02.06.1994
(51) Int. Cl.: C03B 37/075, C03B 37/025, C03B 23/047, C03B 23/11, B65G 49/06, H01J 17/16

(54) **Polyèdres de verre et procédé de fabrication**
Glaspolyedern und Verfahren zu ihrer Herstellung
Glass polyhydra and their process of manufacture

(30) Priorité: 03.06.1993 FR 9306631
(43) Date de publication de la demande: 07.12.1994
(73) Titulaire: SAINT-GOBAIN VITRAGE, 92400 Courbevoie (FR)
(72) Inventeur: Roman, Daniel, F-77260 La Ferte sous Jouarre (FR); Bonnetin, Alain, F-77120 Coulommiers (FR)
(74) Mandataire: Breton, Jean-Claude

(56) Documents cités:
- EP-A- 0 190 011
- EP-A- 0 480 403
- WO-A-81/01910
- US-A- 3 063 094
- US-A- 3 455 667
- US-A- 3 879 182
- US-A- 4 026 693
- US-A- 4 155 733
- US-A- 4 885 020
- US-A- 5 081 639
- PATENT ABSTRACTS OF JAPAN vol. 5, no. 106 (C-62) 10 Juillet 1981 & JP-A-56 045 832 (MORITETSUKUSU CO. LTD.) 25 Avril 1981
- PROCEEDINGS OF THE VII INTERNATIONAL CONGRESS ON GLASS, BRUXELLES, BE, 28 JUIN - 3 JUILLET 1965; R.A.HUMPHREY, "Forming Glass Filaments with Unusual Cross Sections"

## Description

L'invention concerne des polyèdres de verre pouvant être utilisés notamment en tant qu'entretoises permettant de maintenir un espace entre deux feuilles de matériau tel que du verre. Plus particulièrement, l'invention concerne des entretoises permettant la réalisation d'un ensemble de deux feuilles de verre en les maintenant séparées par un espace d'épaisseur limitée généralement inférieure au millimètre sur toute la surface des feuilles de verre.

Un tel système de feuilles de verre est notamment utilisé pour la réalisation d'écrans de type visualisation, quelle qu'en soit la technologie ; il s'agit par exemple d'écrans à plasma, à micropointes, à électroluminescence, etc... En effet, un espace limité doit être maintenu pour la réalisation de ces écrans de façon à permettre notamment de faire le vide entre les deux feuilles de verre.

Ce type d'écran, par exemple, décrit dans le document WO-81/01910 et plus particulièrement la feuille de verre extérieure, c'est-à-dire la feuille de verre qui est à la vue d'un observateur présente une transparence. Les entretoises permettant de maintenir un espacement doivent par conséquent être le moins visible possible.

Une solution actuellement connue consiste à réaliser des entretoises en verre notamment sous forme de billes ou bien sous forme de cylindres pouvant s'apparenter à des fibres de verre. Ces entretoises sont généralement polies de façon à être le moins visible possible.

Ces entretoises semblent réalisables industriellement de façon aisée mais leur utilisation pose des problèmes de stabilité. En effet, les formes arrondies entraînent des roulements lors de la mise en place et éventuellement après montage.

Pour remédier à ce problème, il a été envisagé de réaliser des entretoises en verre qui s'apparentent également à des fibres mais à section de type rectangulaire.

Ces entretoises apportent une meilleure stabilité du fait de surfaces planes de contact avec les feuilles de verre. Par contre, ces entretoises à section de type rectangulaire présentent des crêtes qui peuvent endommager les feuilles de verre. Or pour la réalisation d'écran de visualisation, les feuilles de verre comportent généralement des couches qui ont été déposées au préalable.

Les arêtes des entretoises présentent un risque notamment en cas de glissement. Elles peuvent entraîner un endommagement des couches déposées sur les feuilles de verre et même rayer les feuilles de verre.

Un autre inconvénient réside dans la préparation de ces entretoises. Elles sont généralement réalisées par usinage, ce qui ne permet pas d'obtenir une régularité des dimensions de la section.

D'autre part, pour améliorer la transparence optique, les entretoises sont polies sur toutes leurs faces. Les faces latérales sont polies avec plus ou moins de facilité mais les faces en bout correspondant à la section ne sont polies que très difficilement et avec des coûts de fabrication très importants car le polissage est effectué entretoise par entretoise. Pour pallier à cet inconvénient, il est notamment décrit dans les documents US-3 879 182 et US-4 026 693 des techniques d'étirage et de polissage préalables.

L'invention a pour but la réalisation de polyèdres de verre pouvant être utilisés notamment en tant qu'entretoises, pour le type d'application considérée, qui paient aux inconvénients cités et qui notamment ne risquent pas d'endommager les autres éléments et présentent une quasi-transparence optique lors de leur utilisation.

L'invention a également pour but un procédé de fabrication pour réaliser ces polyèdres à moindre coût et avec des dimensions précises.

Selon l'invention, ces buts sont atteints par la réalisation de polyèdres de verre pouvant être utilisés notamment en tant qu'entretoises, pour la séparation de deux feuilles de verre pouvant comporter des couches déposées sur les faces en vis à vis, possédant une section sensiblement polygonale dont les dimensions des côtés sont inférieures au millimètre et dont les angles sont arrondis avec un rayon de courbure inférieur à 10 microns, et de préférence compris entre 2 et 4 microns, et dont tous les côtés ont une surface plane.

L'une des dimensions du polyèdre est avantageusement bien supérieure aux autres et de préférence au moins dix fois plus grande.

De préférence la section de ces entretoises a une forme proche d'un parallélogramme.

De préférence encore la section est sensiblement carrée. Avantageusement les côtés de la section ont des dimensions comprisent entre 30 microns et 1 millimètre, et de préférence entre 50 et 200 microns. Pour des applications particulières, et pour favoriser leur mise en place, les polyèdres peuvent être sensiblement cubiques.

Ces entretoises sont avantageusement réalisées avec une tolérance des dimensions inférieure au micron et avec une bonne régularité.

De telles entretoises permettent de maintenir un espace entre deux feuilles de verre de façon stable.

En effet, les contacts entre les feuilles de verre et les entretoises se font selon des surfaces planes. De plus, les angles qui ont été arrondis avec des rayons de courbure inférieurs à 10 microns, permettent de conserver une forme générale de type polygonal et donc des surfaces planes pour les contacts entre entretoises et feuilles de verre.

De plus, ces arrondis évitent tous risques de dégradation des surfaces des feuilles de verre ou bien des couches qui ont été déposées.

Selon un mode préféré de l'invention les entretoises sont polies sur toutes ou certaines de leurs faces.

De cette façon, lorsqu'elles sont utilisées pour la séparation de deux feuilles de verre, elles ne sont que très peu visibles.

De plus, le fait que ces entretoises à section polygonale possèdent des "angles arrondis" contribue également à les rendre peu visibles puisqu'elles ne possèdent aucune arête latérale.

Avantageusement, ces entretoises sont réalisées avec un verre possédant le même indice de réfraction que les feuilles de verre qui forment l'écran.

D'autre part, on choisit avantageusement un verre de qualité optique qui ne présente pas de bulle.

L'invention propose aussi un procédé pour la fabrication de ces polyèdres de verre utilisés notamment en tant qu'entretoises. Ce procédé comporte plusieurs étapes. Tout d'abord, on étire un barreau primitif ou tige de verre qui présente une section de forme sensiblement identique à celle que l'on veut obtenir à un rapport homothétique près. Ce barreau primitif qui a une taille suffisamment importante peut être usiné selon la section voulue, avec une grande précision. De plus, ce barreau primitif est initialement poli sur ses faces latérales.

Cette étape d'étirage se fait avec une élévation de la température du barreau primitif à une température proche de sa température de ramollissement et l'étirage proprement dit est alors réalisé en au moins deux étapes.

Les dimensions requises pour les applications de ces entretoises sont telles qu'il est préférable d'étirer le barreau primitif en au moins deux étapes, ce qui permet d'avoir des dimensions des côtés de la section du barreau primitif de l'ordre d'une ou plusieurs dizaines de millimètres. Le barreau primitif est alors facilement usinable.

Le barreau étiré obtenu après étirage du barreau primitif présente une section de forme semblable à celle du barreau primitif à un rapport homothétique près et conserve un aspect poli sur ses faces latérales.

De plus, cet aspect poli se conserve du fait du passage à température élevée qui crée un 〈〈 poli au feu 〉〉. Ce phénomène peut permettre d'utiliser non pas un barreau primitif poli sur ses faces latérales mais présentant un aspect 〈〈 douci fin 〉〉.

Ce barreau étiré est ensuite découpé en plusieurs éléments qui sont de nouveau étirés pour conduire à des tiges qui présentent la section des entretoises désirées et qui conservent toujours un aspect poli sur les faces latérales.

Ces tiges sont rassemblées parallèlement les unes aux autres. De préférence, ces tiges sont rassemblées dans un cylindre notamment en verre, et sont solidarisées à l'aide d'une cire à bas point de fusion.

L'ensemble des tiges est ensuite découpé à la longueur désirée pour qu'elles forment les entretoises souhaitées.

La longueur étant obtenue, l'ensemble des entretoises (ou tiges) est poli aux deux extrémités. Il est ainsi possible d'obtenir des entretoises polies sur toutes leurs faces. De plus, si la découpe n'est pas très précise, il est possible de rectifier la longueur des entretoises lors du polissage.

Les entretoises sont ensuite solidarisées les unes des autres notamment par fusion de la cire, ou par dissolution chimique.

Le procédé ainsi décrit permet d'obtenir des entretoises avec des dimensions précises et à moindre coût. En effet, les opérations manuelles exécutées par un opérateur, sont très limitées. D'une part, cela diminue les coûts de production et d'autre part, les opérations conduisant aux dimensions n'étant pas manuelles sont à la fois précises et régulières.

L'invention propose également un dispositif pour la mise en oeuvre de ce procédé.

Le dispositif proposé pour la fabrication de polyèdres en verre de section polygonale dont les côtés sont inférieurs à 1 millimètre comprend des moyens de chauffage et d'étirage d'un barreau primitif de section polygonale, des moyens pour la découpe du barreau étiré en plusieurs tiges, des moyens de rassemblage des tiges, des moyens pour la découpe des tiges rassemblées et des moyens de polissage des extrémités des tiges rassemblées et découpées.

Selon un mode de réalisation de l'invention, les moyens de chauffage sont un anneau chauffé par effet Joule en basse tension associé à un système mécanique permettant le défilement du barreau primitif au sein de l'anneau. Il est possible de cette façon de contrôler avec précision la température du barreau primitif.

De façon préférée, les moyens d'étirage sont composés de deux courroies motrices. Les courroies sont avantageusement réalisées en un matériau évitant le glissement sur le verre. Elles peuvent notamment être réalisées en silicone.

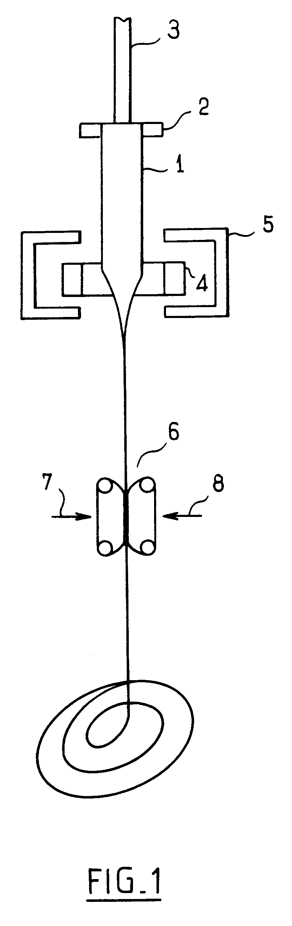

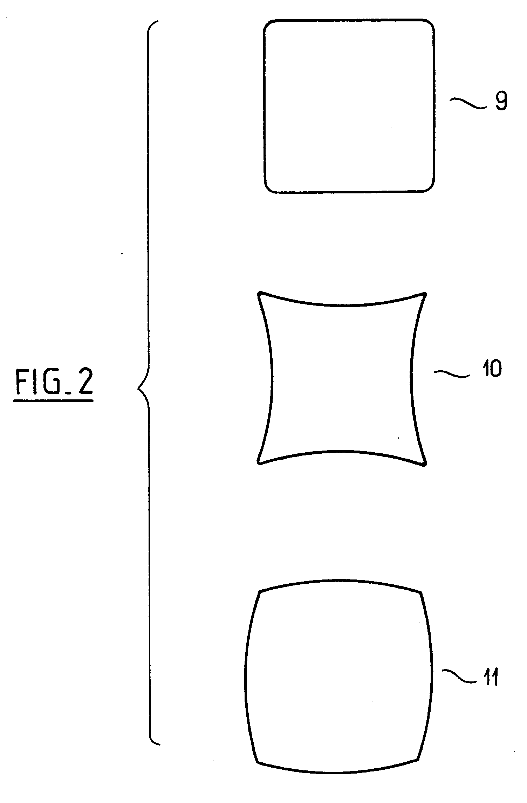

D'autres détails et caractéristiques avantageux de l'invention ressortent ci-après de la description des exemples de réalisation de l'invention décrits en référence aux figures 1 et 2 qui représentent :
- figure 1, un schéma d'un exemple de dispositif selon l'invention,
- figure 2, des schémas de sections d'entretoises obtenues selon l'invention.

La figure 1 décrit le schéma d'une installation pour la réalisation d'entretoises possédant des sections polygonales dont les côtés ont des dimensions inférieures au millimètre et pouvant être de l'ordre de quelques dizaines de microns.

Un barreau primitif 1 possédant une section de type polygonal est fixé à un support 2. Le barreau primitif a été initialement préparé, c'est-à-dire qu'il a été usiné selon une section correspondant sensiblement après étirage à la section désirée pour les entretoises à un rapport d'homothétie près. De plus, toutes les faces latérales ont été polies.

Le support 2 est lui-même rattaché à un système mécanique dont l'axe 3 est représenté sur le schéma.

Ce système mécanique, qui peut être par exemple une vis sans fin, permet de donner un mouvement vertical descendant au barreau primitif qui peut ainsi passer au travers d'un anneau chauffant 4. Cet anneau chauffant 4 est chauffé par effet Joule en basse tension. Un tel système de chauffage peut être régulé à plus ou moins 0,1 degré. Cela permet d'élever la température du barreau primitif à la température désirée avec une grande précision.

L'anneau chauffant est entouré d'un réfractaire d'isolation 5. La hauteur de l'anneau chauffant est d'environ 70 millimètres. Placé sous le dispositif de chauffage à une distance d'environ 500 millimètres, un dispositif 6 permet l'étirage du barreau primitif. Ce dispositif se compose de deux courroies motrices. La force motrice de ces courroies permet l'étirage du barreau primitif.

Les courroies sont réalisées en un matériau permettant d'éviter le glissement sur le verre et donc d'obtenir un étirage régulier. Elles sont par exemple réalisées en silicone.

La longueur de la zone de contact entre les courroies et le barreau étiré est environ 100 mm.

D'autre part, des éléments non représentés sur la figure 1 exercent des forces de pression latérales 7, 8 sur les courroies et favorisent ainsi l'étirage. Ces éléments sont par exemple des petits vérins à pression réglable.

Le dispositif ainsi présenté sur la figure 1 permet l'étirage du barreau primitif pour la réalisation d'entretoises.

Il apparaît que selon ce procédé d'étirage, il est possible de conserver quasiment le même profil, c'est-à-dire sensiblement la même forme de section entre le barreau primitif et le barreau étiré, avec un rapport homothétique entre les deux.

Il est possible de réaliser l'étirage en une seule étape mais il est avantageux de le réaliser en au moins deux étapes. En effet, il est préférable de commencer avec un barreau primitif dont les dimensions des sections sont de l'ordre de la dizaine de millimètres. De telles dimensions facilitent l'usinage du barreau primitif. Les dimensions finales désirées pour l'entretoise sont de l'ordre de quelques dizaines de microns. Un étirage permettant le passage direct aux dimensions finales des entretoises serait trop important.

Il est donc préférable de passer par un état intermédiaire dont les dimensions sont alors de l'ordre du millimètre. Lors du premier étirage, le barreau étiré est découpé en plusieurs éléments après passage entre les deux courroies. Ces éléments sont ensuite étirés selon le même procédé. L'élément obtenu a la section des entretoises désirées. Les dimensions de cet élément en font un élément souple qui vient se lover sous le dispositif d'étirage.

Sur la figure 2, sont représentés trois profils différents du barreau après un double étirage.

Le profil 9 correspond à un profil désiré d'entretoise de section carrée. Les profils 10 et 11 non désirables sont obtenus à partir du même barreau primitif mais avec des conditions opératoires différentes. Le profil 10 correspond notamment a une température de l'anneau 4 trop basse et le profil 11 a une température trop élevée.

Les différents paramètres, que sont la vitesse de passage du barreau dans l'anneau, la température de l'anneau, la vitesse d'entraînement des courroies ainsi que les forces de pression 7, 8 exercées par les courroies sur l'élément déjà étiré, doivent être réglés de façon à obtenir les dimensions souhaitées après étirage tout en conservant la forme initiale donnée au barreau primitif.

Il n'existe pas de lois définies permettant de combiner ces différents paramètres. De plus, leurs valeurs varient en fonction de la forme de section désirée et de ses dimensions.

Ces valeurs sont donc établies de façon empirique par un manipulateur qui peut également établir des abaques en réalisant des essais.

Le barreau étiré qui s'est lové sur le plateau de réception est ensuite récupéré par un opérateur qui le divise en une multitude de fines "tiges". Il rassemble ces tiges dans un tube de verre et il coule une cire pour que les tiges soient bien tenues et solidaires les unes des autres.

Cette cire est par exemple une résine optique à bas point de fusion, de l'ordre de 60 à 70°C.

Après refroidissement, l'ensemble, formé par le tube de verre contenant les tiges maintenues par la cire, peut être découpé par exemple à l'aide d'une scie à fil, sous forme de rondelles. L'épaisseur des rondelles de tube de verre correspond à la longueur désirée des entretoises, qui est généralement bien supérieure aux autres dimensions, par exemple cent fois plus grande.

Chaque surface des rondelles est alors polie. Ce polissage permet de polir chaque extrémité des tiges contenues dans les rondelles. Cette technique est très avantageuse elle permet d'une part de rectifier avec plus de précision la longueur des tiges et d'autre part, il est possible de polir les extrémités des tiges non pas une par une mais toutes ensembles.

Le polissage fini, l'opérateur élève la température de l'ensemble de façon à fondre la cire ou l'attaque chimiquement par un solvant et récupère les tiges à l'aide d'un filtre.

Il ne reste plus alors qu'à conditionner ces tiges ou entretoises.

Le dispositif décrit mettant en oeuvre le procédé selon l'invention permet de réaliser des entretoises notamment utilisées pour la séparation de deux feuilles de verre pour écran à plasma.

De plus, selon l'invention, il est possible d'obtenir une très bonne régularité des dimensions des entretoises obtenues.

## Revendications

1. Polyèdre en verre, possédant une section sensiblement du type polygonale dont les dimensions des côtés sont inférieures au millimètre, ***caractérisé en ce que*** les angles de ce polygone sont arrondis avec un rayon de courbure inférieur à 10 microns et en ce que tous les côtés de ce polyèdre ont une surface plane.

2. Polyèdre selon la revendication 1, ***caractérisé en ce que*** le rayon de courbure est compris entre 2 et 4 microns.

3. Polyèdre selon l'une des revendications 1 ou 2, ***caractérisé en ce que*** la section est de type parallélogramme.

4. Polyèdre selon l'une des revendications 1 à 3, ***caractérisé en ce que*** la section est carrée.

5. Polyèdre selon l'une des revendications 1 à 4, ***caractérisé en ce que*** l'une des dimensions est bien supérieure aux autres et de préférence dix fois plus grande.

6. Polyèdre selon l'une des revendications 1 à 4, ***caractérisé en ce qu'***ils sont sensiblement cubiques.

7. Polyèdre selon l'une des revendications 1 à 6, ***caractérisé en ce que*** les côtés de la section ont des dimensions comprisent entre 30 microns et 1 mm, et de préférence entre 50 et 200 microns.

8. Polyèdre selon l'une des revendications 1 à 7, ***caractérisé en ce qu'***il est réalisé avec une tolérance des dimensions inférieure au micron et avec une bonne régularité.

9. Polyèdre selon l'une des revendications 1 à 8, ***caractérisé en ce qu***'il est poli sur au moins certaines de ses faces.

10. Polyèdre selon l'une des revendications 1 à 9, ***caractérisé en ce que*** son indice de réfraction est identique à celui des feuilles de verre.

11. Utilisation de polyèdres selon l'une des revendications 1 à 9 pour maintenir un espace entre deux plaques de matériaux.

12. Utilisation de polyèdres selon l'une des revendications 1 à 9 comme entretoise notamment pour la séparation de deux feuilles de verre pouvant comporter des couches superficielles.

13. Utilisation de polyèdres selon la revendication 10 pour maintenir un espace entre deux feuilles de verre dans la réalisation d'un écran de type visualisation, tel que écran à plasma, écran à micropointes, écran à électroluminescence.

14. Procédé de fabrication de polyèdres définis selon l'une des revendications 1 à 10, dans lequel on étire un barreau primitif de section polygonale (1), avantageusement poli sur toutes ses faces latérales, on découpe le barreau étiré en plusieurs tiges, on rassemble ces tiges parallèlement les unes aux autres telles qu'elles soient bien tenues, on les découpe à une longueur désirée, on polit les extrémités des tiges toutes ensembles ***et*** on les désolidarise les unes des autres.

15. Procédé selon la revendication 14, ***caractérisé en ce que*** l'étirage se fait avec élévation de la température du barreau primitif à une température proche de sa température de ramollissement et en ce que celui-ci est alors étiré en au moins deux étapes.

16. Procédé selon l'une des revendications 14 ou 15, ***caractérisé en ce que*** les tiges obtenues sont rassemblées dans un cylindre par exemple en verre, et en ce que l'on coule une cire à bas point de fusion de telle sorte que les tiges sont alors solidaires les unes des autres au sein du cylindre.

17. Dispositif pour la mise en oeuvre du procédé défini selon l'une des revendications 14 à 16, comprenant des moyens de chauffage (4) et d'étirage (6) d'un barreau primitif de section polygonale (1), des moyens pour la découpe du barreau étiré en plusieurs tiges, des moyens de rassemblage des tiges, des moyens pour la découpe des tiges rassemblées et des moyens de polissage des extrémités des tiges rassemblées et découpées.

18. Dispositif selon la revendication 17, ***caractérisé en ce que*** les moyens de chauffage sont un anneau (4) chauffé par effet Joule en basse tension associé à un système mécanique permettant le défilement du primitif.

19. Dispositif selon la revendication 17 ou 18, ***caractérisé en ce que*** les moyens d'étirage (6) sont deux courroies motrices.

20. Dispositif selon la revendication 19, ***caractérisé en ce que*** les courroies sont en matériau évitant les glissements sur le verre, tel que le silicone.

## Claims

1. Glass polyhedron having a substantially polygonal cross-section, whose side dimensions are less than 1 millimetre, characterized in that the angles of said polygon are rounded with a radius of curvature smaller than 10 microns and in that the sides of said polyhedron have a planar surface.

2. Polyhedron according claims 1, characterized in that the radius of curvature is between 2 and 4 microns.

3. Polyhedron according to one of the claims 1 or 2, characterized in that the cross-section is of the parallelogram type.

4. Polyhedron according to one of the claims 1 to 3, characterized in that the cross-section is square.

5. Polyhedron according to one of the claims 1 to 4, characterized in that one of the dimensions greatly exceeds the others and is preferably ten times larger.

6. Polyhedron according to one of the claims 1 to 4, characterized in that they are substantially cubic.

7. Polyhedron according to one of the claims 1 to 6, characterized in that the sides of the cross-section have dimensions between 30 microns and 1 mm and preferably between 50 and 200 microns.

8. Polyhedron according to one of the claims 1 to 7, characterized in that it is produced with a dimensional tolerance below 1 micron and with a good regularity.

9. Polyhedron according to one of the claims 1 to 8, characterized in that it is polished on at least certain of its faces.

10. Polyhedron according to one of the claims 1 to 9, characterized in that its refractive index is identical to that of the glass sheets.

11. Use of polyhedrons according to one of the claims 1 to 9 for maintaining a space between two material plates.

12. Use of polyhedrons according to one of the claims 1 to 9 as a spacer, particularly for the separation of glass sheets which can have surface films.

13. Use of polyhedrons according to claim 10 in order to maintain a space between two glass sheets in the production of a display screen, such as a plasma display, microdot display or electroluminescent display.

14. Process for the production of polyhedrons in accordance with one of the claims 1 to 10, wherein drawing takes place of a starting bar with a polygonal cross-section (1), advantageously polished on all its lateral faces, said drawn bar being cut into several rods, said rods are collected parallel to one another in such a way that they are well supported, they are cut to the desired length, the ends of the rods are polished all together and they are disengaged from one another.

15. Process according to claim 14, characterized in that drawing takes place with a temperature rise of the starting bar to a level close to its softening point and in that the bar is then drawn in at least two stages.

16. Process according to one of the claims 14 or 15, characterized in that the rods obtained are collected in an e.g. glass cylinder, in that a wax having a low melting point is poured in such a way that the rods are then joined together within the cylinder.

17. Apparatus for performing the process according to one of the claims 14 to 16, comprising means for heating (4) and drawing (6) a starting bar having a polygonal cross-section (1), means for cutting the drawn bar into several rods, means for collecting together the rods, means for cutting the collected rods and means for polishing the ends of the collected, cut rods.

18. Apparatus according to claim 17, characterized in that the heating means are a ring (4) heated by low voltage Joule effect combined with a mechanical system permitting the movement of the starting bar.

19. Apparatus according to claim 17 or 18, characterized in that the drawing means (6) are two drive belts.

20. Apparatus according to claim 19, characterized in that the belts are made from a material preventing sliding on the glass, such as silicone.

## Patentansprüche

1. Polyeder aus Glas, das einen im wesentlichen polygonalen Querschnitt besitzt, dessen Seitenmaße kleiner als ein Millimeter sind, **dadurch gekennzeichnet, daß** die Winkel des Polygons mit einem Krümmungsradius von unter 10 Mikrometern abgerundet sind **und daß** alle Seiten dieses Polyeders eine ebene Fläche aufweisen.

2. Polyeder nach Anspruch 1, **dadurch gekennzeichnet, daß** der Krümmungsradius 2 bis 4 Mikrometer beträgt.

3. Polyeder nach Anspruch 1 oder 2, **dadurch gekennzeichnet, daß** der Querschnitt die Form eines Parallelogramms hat.

4. Polyeder nach einem der Ansprüche 1 bis 3, **dadurch gekennzeichnet, daß** der Querschnitt quadratisch ist.

5. Polyeder nach einem der Ansprüche 1 bis 4, **dadurch gekennzeichnet, daß** eines der Maße deutlich größer als die anderen und vorzugsweise zehnmal größer ist.

6. Polyeder nach einem der Ansprüche 1 bis 4, **dadurch gekennzeichnet, daß** es im wesentlichen kubisch ist.

7. Polyeder nach einem der Ansprüche 1 bis 6, **dadurch gekennzeichnet, daß** die Maße der Seiten des Querschnitts 30 Mikrometer bis 1 mm und vorzugsweise 50 bis 200 Mikrometer betragen.

8. Polyeder nach einem der Ansprüche 1 bis 7, **dadurch gekennzeichnet, daß** es mit einer Maßtoleranz von weniger als einem Mikrometer und mit einer hohen Regelmäßigkeit hergestellt ist.

9. Polyeder nach einem der Ansprüche 1 bis 8, **dadurch gekennzeichnet, daß** es auf mindestens einigen seiner Seiten poliert ist.

10. Polyeder nach einem der Ansprüche 1 bis 9, **dadurch gekennzeichnet, daß** sein Brechungsindex gleich dem von Glasscheiben ist.

11. Verwendung von Polyedern nach einem der Ansprüche 1 bis 9, um zwischen zwei Materialplatten einen Anstand zu halten.

12. Verwendung von Polyedern nach einem der Ansprüche 1 bis 9 als Abstandshalter, insbesondere zur Trennung von zwei Glasscheiben, die Oberflächenschichten aufweisen können.

13. Verwendung von Polyedern nach Anspruch 10, um bei der Herstellung eines Bildschirms wie eines Plasma-, Bildpunkt- und Elektrolumineszenzbildschirms zwischen zwei Glasscheiben einen Anstand zu halten.

14. Verfahren zur Herstellung von Polyedern gemäß einem der Ansprüche 1 bis 10, in welchem ein Rohstab (1) mit polygonalem Querschnitt, der vorteilhafterweise auf allen Seitenflächen poliert ist, gezogen und der gezogene Stab in viele Stäbchen zerschnitten wird, diese Stäbchen so zueinander parallel vereinigt werden, daß sie fest gehalten werden, sie auf die gewünschte Länge zugeschnitten, die Enden der Stäbchen zusammen poliert und diese voneinander gelöst werden.

15. Verfahren nach Anspruch 14, **dadurch gekennzeichnet, daß** der Ziehvorgang bei einer Erhöhung der Temperatur des Rohstabes auf eine Temperatur in der Nähe seiner Erweichungstemperatur erfolgt **und daß** dieser dann in mindestens zwei Stufen gezogen wird.

16. Verfahren nach Anspruch 14 oder 15, **dadurch gekennzeichnet, daß** die erhaltenen Stäbchen in einem beispielsweise aus Glas bestehenden Zylinder vereinigt werden **und daß** ein Wachs mit niedrigem Schmelzpunkt derart hineingegossen wird, daß die Stäbchen danach im Zylinder miteinander verbunden sind.

17. Vorrichtung zur Durchführung des Verfahrens gemäß einem der Ansprüche 14 bis 16, welche Mittel (4) zum Erhitzen und Mittel (6) zum Ziehen eines Rohstabes (1) mit polygonalem Querschnitt, Mittel zum Zerschneiden des gezogenen Stabes in viele Stäbchen, Mittel zum Vereinigen der Stäbchen, Mittel zum Zuschneiden der vereinigten Stäbchen und Mittel zum Polieren der Enden der vereinigten und zugeschnittenen Stäbchen umfaßt.

18. Vorrichtung nach Anspruch 17, **dadurch gekennzeichnet, daß** das Mittel zum Erhitzen ein durch Joulesche Wärme aus Niederspannung beheizter Ring (4) ist, der mit einem mechanischen System verbunden ist, welches das Durchlaufen des Rohteils ermöglicht.

19. Vorrichtung nach Anspruch 17 oder 18, **dadurch gekennzeichnet, daß** die Ziehmittel (6) zwei Treibriemen sind.

20. Vorrichtung nach Anspruch 19, **dadurch gekennzeichnet, daß** die Treibriemen aus einem Material wie Silicon bestehen, das auf Glas nicht gleitet.
